# EUROPEAN PATENT APPLICATION

(11) **EP 4 730 758 A1**
(43) Date of publication of application: **22.04.2026**
(21) Application number: 25207677.3
(22) Date of filing: 09.10.2025
(51) Int. Cl.: H04N 1/00, G06T 7/00, G06F 3/12

(54) **INSPECTION APPARATUS, CONTROL METHOD THEREOF, AND STORAGE MEDIUM**

(30) Priority: 15.10.2024 JP 2024180339
(71) Applicant: CANON KABUSHIKI KAISHA, Ohta-ku Tokyo 146-8501 (JP)
(72) Inventor: AZUMA, Erika, Tokyo (JP)
(74) Representative: WESER & Kollegen Patentanwälte PartmbB

(57) **Abstract**

The disclosure is directed to a inspection apparatus comprising: one or more memory devices that store a set of instructions; and one or more processors that execute the set of instructions to: acquire a reference image in units of pages corresponding to a printed material, set an inspection setting of the printed material via the reference image in units of pages, set a first region, in accordance with a user operation, as an inspection region on a reference image of a first page for a matching inspection for inspecting whether or not information read from a printed image matches among a plurality of inspection regions, and set a second region, in accordance with a user operation, as an inspection region of a matching target of the first region on a reference image of a second page different from the first page.

## Description

### TECHNICAL FIELD

The present disclosure relates to an inspection apparatus, a control method thereof, and a storage medium.

### BACKGROUND

A known inspection for checking whether a printed material is correctly printed has been performed manually, but in recent years, an apparatus that automatically performs inspection has been used as post-processing of a printing machine. In such an inspection apparatus, inspection is performed on a variable region portion (variable data) such as a character string or a barcode in variable printing. Examples thereof include a data readability inspection for checking whether a character string or a barcode is readable, and a data comparison inspection for comparing a reading result of a character string or a barcode with a correct answer. Hereinafter, the data readability inspection and the data comparison inspection are referred to as a data inspection. In addition, one of the data inspections is a matching inspection.

Japanese Patent Laid-Open No. 2024-28314 proposes a method for a matching inspection for checking whether reading results of data inspection regions set on a front surface and a rear surface match.

### SUMMARY

However, the known technique described above has the following problems. Since the method for the known technique described above can only inspect the matching between the regions on the front surface and the rear surface, it cannot perform a matching inspection of the regions on separate surfaces or a plurality of surfaces. Since the product is limited to a product that includes data required to match on the front and rear, there is a problem that a matching inspection of a wide range of products cannot be performed. More specifically, with the known technique described above, it is not possible to recognize a combination of regions on separate surfaces or a plurality of surfaces as a matching inspection target. Causing a computer to search the entire print data for the matching inspection target increases a processing load and is not realistic from the viewpoint of performance of the inspection setting. On the other hand, if the computer cannot suitably execute the matching inspection of the regions on the separate surfaces or the plurality of surfaces, it is necessary to perform the inspection manually. In this case, a large amount of time is spent in the inspection time, and further, the inspection quality is degraded, and therefore the possibility of overlooking an abnormal printed material is increased. If printing is continued with the abnormal printed material being overlooked, consumables (resources) such as paper and ink are wastefully consumed.

The present disclosure enables realization of a novel mechanism for supporting an inspection setting of a printed material.

The present disclosure in its first aspect provides an inspection apparatus as specified in claim 1. Optional features are specified in claim 2 to 16.

The present disclosure in its second aspect provides a control method for an inspection apparatus as specified in claim 17.

The present disclosure in its third aspect provides a non-transitory computer-readable storage medium as specified in claim 18.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a schematic diagram illustrating an overall configuration of an inspection system according to one embodiment.
FIG. 2 is a block diagram illustrating a configuration of an information processing apparatus, an inspection apparatus, and a printing apparatus according to one embodiment.
FIG. 3 is a block diagram illustrating a software configuration according to one embodiment.
FIG. 4 is a view illustrating an example of a job property screen according to one embodiment.
FIG. 5 is a flowchart of an inspection of the information processing apparatus according to one embodiment.
FIG. 6 is a flowchart at the time of reference image registration of the inspection apparatus according to one embodiment.
FIG. 7 is a view illustrating an example of a UI screen of an inspection setting according to one embodiment.
FIG. 8A and 8B are views illustrating an example of a UI screen of a matching inspection region setting according to one embodiment.
FIG. 9 is an operation flowchart of an inspection of the inspection apparatus according to one embodiment.
FIG. 10 is an operation flowchart of a matching inspection of the inspection apparatus according to one embodiment.
FIGS. 11A to 11C are views illustrating an example of holding of region information according to one embodiment.
FIG. 12 is a view illustrating an example of a UI screen of the inspection setting according to one embodiment.
FIG. 13 is a view illustrating an example of a UI screen of the inspection setting according to one embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

In the following description, an image forming apparatus may be referred to as a multifunction peripheral or an MFP. Hereinafter, image formation for forming an image on paper (sheet) may be referred to as printing. Unless otherwise specified, as long as the functions of the present disclosure are realized, the technique of the present disclosure can also be applied to an inspection apparatus that is connected via a network such as a local area network (LAN) or a wide area network (WAN) and performs processing. That is, the system configuration to which various terminals described in the following embodiments are connected is an example, and it goes without saying that there are various configuration examples depending on the application and purpose.

### First Embodiment

### Configuration of inspection system

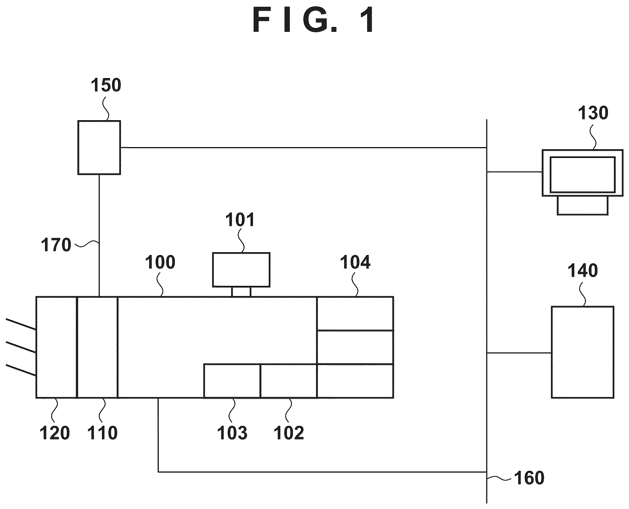

Hereinafter, a first embodiment of the present disclosure will be described. The configuration of an inspection system including an inspection apparatus according to the present embodiment will be described with reference to FIG. 1. The present inspection system is configured to include an image forming apparatus 100, an inspection unit 110, a large-capacity stacker 120, a client PC 130, an information processing apparatus 140, and an inspection apparatus 150. The apparatuses are connected in a communication-enabling manner to one another via a network 160 and a communication cable 170.

The image forming apparatus 100 includes a UI unit 101, a paper feed deck 102, and a paper feed deck 103. Furthermore, an optional deck 104 including three paper feed decks is connected to the image forming apparatus 100. A recording sheet (hereinafter, also referred to as paper, a sheet, or a recording medium) such as printing paper can be set to each of the decks. The image forming apparatus 100 performs print output in accordance with various input data, for example, print data sent from the client PC 130 or the information processing apparatus 140. Then, the image forming apparatus 100 further includes the inspection unit 110 and the large-capacity stacker 120, and is connected to the inspection unit 110 and the large-capacity stacker 120 via a communication cable that is an internal bus.

The inspection unit 110 receives a printed material output from the image forming apparatus 100, and acquires image data for inspecting whether or not there is an abnormal image in the received printed material. Here, the abnormal image degrades the quality of the printed material. For example, it is an abnormal image (spot) having a round shape that occurs due to a color material adhering to an unintended portion at the time of printing, and an abnormal image (streak) having a linear shape that is a color omission that occurs due to not a sufficient color material adhering to an intended portion. Then, the acquired image data is transferred to the inspection apparatus 150 described later via the communication cable 170, an inspection on whether or not there is an abnormal image in the printed material on the inspection apparatus 150 is performed, and the inspection result is acquired from the inspection apparatus 150.

The large-capacity stacker 120 includes a main tray and a top tray, and several thousand sheets of paper can be stacked on the main tray at a time. It is also possible to receive output paper inspected by the inspection unit 110 and switch a paper discharge destination based on the inspection result of the inspection unit 110.

The image forming apparatus 100 is connected in a communication-enabling manner to the client PC 130, the information processing apparatus 140, and the inspection apparatus 150 via the network 160. In the present embodiment, the inspection apparatus 150 performs the inspection, but there is no intention to limit the technique of the present disclosure, and a configuration such as an in-line inspection machine that consistently performs image formation, inspection, post-processing, and paper discharge may be used.

A print job is generated by the client PC 130, transmitted to the information processing apparatus 140 via the network 160, and managed by the information processing apparatus 140. Then, the print job is transmitted from the information processing apparatus 140 to the image forming apparatus 100 via the network 160, and the image forming apparatus 100 performs processing of printing on paper. Note that a form may be adopted in which the print job is generated and managed by the information processing apparatus 140, transmitted to the image forming apparatus 100 via the network 160, and managed by the image forming apparatus 100.

Note that the client PC 130, the information processing apparatus 140, and the inspection apparatus 150 may have a form of being connected to the communication cable so as to be able to communicate with the image forming apparatus 100. That is, the connection form of the image forming apparatus 100, the information processing apparatus 140, and the client PC 130 illustrated in the present embodiment is an example, and it goes without saying that there are various connection forms other than that illustrated in the present embodiment. A form may be adopted in which a finisher, a folding machine, a book-binder, or the like that can staple, in addition to the inspection unit 110 and the stacker 120, are connected to the image forming apparatus 100.

### Configuration of Each Apparatus

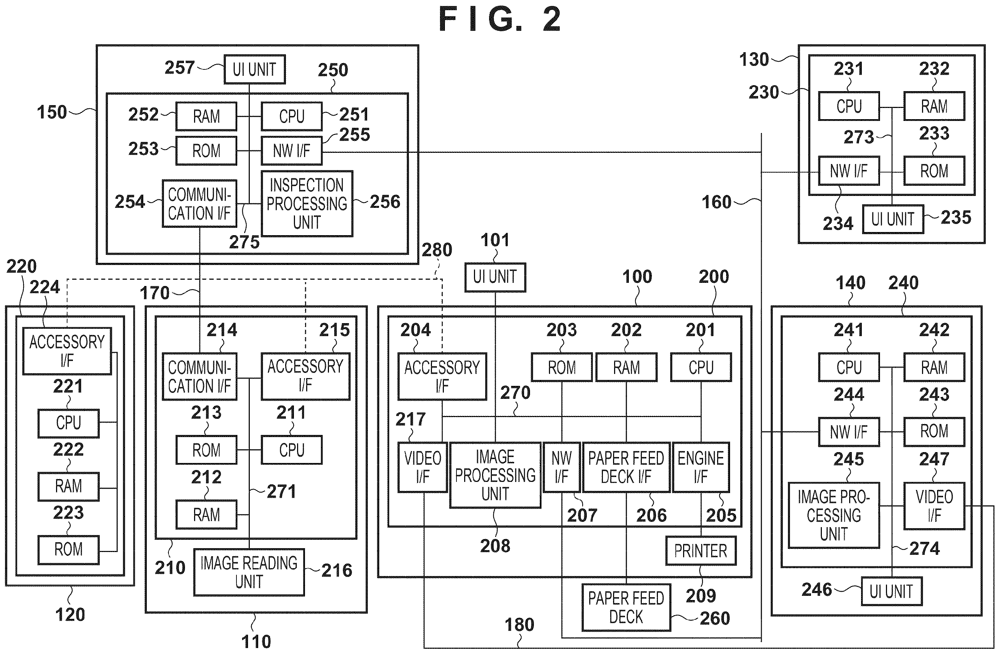

The hardware configuration of the image forming apparatus 100, the inspection unit 110, the large-capacity stacker 120, the client PC 130, the information processing apparatus 140, and the inspection apparatus 150 of the present embodiment will be described with reference to FIG. 2. Here, only the configuration related to the technique of the present disclosure will be described, and each apparatus is not configured to include only the device illustrated in FIG. 2.

### Client PC

The client PC 130 is a personal computer (PC) for generating a print job and transmitting the print job to the information processing apparatus 140 via the network 160. The client PC 130 includes a control unit 230 and a UI unit 235. The control unit 230 includes a central processing unit (CPU) 231, a random access memory (RAM) 232, a ROM 233, and a network interface (hereinafter, abbreviated as NW I/F) 234.

The CPU 231 performs control and calculation in each unit in the client PC 130 via an internal bus 273, and execution of a program stored in the ROM 233 and loaded into the RAM 232. The RAM 232 is a type of general volatile storage apparatus that can be directly accessed from the CPU 231, and is used as a work area of the CPU 231 or another temporary data storage region. The ROM 233 functions as a temporary storage region and a work memory at the time of operation of the client PC. The NW I/F 234 transmits and receives data to and from the information processing apparatus 140 via the network 160. The UI unit 235 includes, for example, a keyboard, a mouse, a display, and other input/output apparatuses, and is a device that can input various setting values or designated values.

### Information Processing Apparatus

The information processing apparatus 140 performs RIP processing on print data or document data, and generates a bitmap image for performing printing by the image forming apparatus 100. The information processing apparatus 140 manages control and a print job regarding printing of the image forming apparatus 100. The information processing apparatus 140 includes a control unit 240 and a UI unit 246. The control unit 240 includes a CPU 241, a RAM 242, a ROM 243, an NW I/F 244, an image processing unit 245, and a video I/F 247.

The CPU 241 performs control and calculation in each unit in the information processing apparatus 140 via an internal bus 274, and execution of a program stored in the ROM 243 and loaded into the RAM 242. The RAM 242 is a type of general volatile storage apparatus that can be directly accessed from the CPU 241, and is used as a work area of the CPU 241 or another temporary data storage region. The ROM 243 functions as a temporary storage region and a work memory at the time of operation of the information processing apparatus.

The NW I/F 244 performs communication with the client PC 130, the image forming apparatus 100, and the inspection apparatus 150 via the network 160. A form may be adopted in which the inspection apparatus 150 includes an NW I/F 255, and the information processing apparatus 140 performs communication with the inspection apparatus 150 via the NW I/F 255 and the NW I/F 244. For example, a case where a RIP image used for printing by the image forming apparatus 100 is used as a reference image will be considered. Here, the reference image indicates a correct answer image for comparing a printed material with a scanned read image when the printed material is inspected. The reference image is an image to be displayed on a setting screen when the inspection setting is performed, and an inspection region can be set on the reference image displayed on the setting screen. In this case, the reference image may be transmitted to the inspection apparatus 150 through a communication I/F 214, or may be transmitted from the NW I/F 255 included in the inspection apparatus 150 to the inspection apparatus 150 through an NW I/F 207 and the NW I/F 234. The image processing unit 245 performs RIP processing on the print data.

The UI unit 246 includes, for example, a keyboard, a mouse, a display, and other input/output apparatuses, and is a device that can input various setting values or designated values. The image forming apparatus 100 performs print output based on various input data, for example, print data sent from the client PC 130 or the information processing apparatus 140.

### Image Forming Apparatus

The image forming apparatus 100 is connected to the UI unit 101 and a paper feed deck 260. The image forming apparatus 100 includes a control unit 200 and a printer unit 209. The control unit 200 includes a CPU 201, a RAM 202, a ROM 203, an accessory I/F 204, an engine I/F 205, a paper feed deck I/F 206, the network I/F 207, an image processing unit 208, and a video I/F 217. The control unit 200 is connected to the printer unit 209 via the engine I/F 205.

The CPU 201 performs control and calculation in each unit in the image forming apparatus 100 via an internal bus (system bus) 270. The CPU 201 performs execution of a program stored in the ROM 203 and loaded into the RAM 202. The RAM 202 is a type of general volatile storage apparatus that can be directly accessed from the CPU 201, and is used as a work area of the CPU 201 or another temporary data storage region. The RAM 202 functions as a temporary storage region and a work memory at the time of operation of the printing apparatus. The ROM 203 stores program data to be executed by the CPU 201 at the time of activation, setting data of the control unit 200, and the like.

The accessory I/F 204 is connected to an accessory I/F 215 and an accessory I/F 224 via a cable 280. That is, the image forming apparatus 100 performs communication with the inspection unit 110 and the large-capacity stacker 120 via the accessory I/Fs 204, 215, and 224. The engine I/F 205 performs communication and control with the printer unit 209. The paper feed deck I/F 206 performs communication and control with the paper feed deck 260. The paper feed deck 260 collectively refers to the paper feed decks 102 and 103 and the optional deck 104 as a hardware configuration. The UI unit 101 is a user interface for performing overall operation of the image forming apparatus 100.

The NW I/F 207 is connected to the NW I/F 244 of the information processing apparatus 140 via the network 160, and performs communication between the information processing apparatus 140 and the image forming apparatus 100. Note that this example takes a form in which the interfaces connected to the internal buses 270 and 160 are directly connected to each other, but a form may be adopted in which the information processing apparatus 140 and the image forming apparatus 100 are connected to each other by, for example, a network, and the connection form is not limited. The video I/F 217 is connected to the video I/F 247 via a video cable 180, and performs communication of image data between the information processing apparatus 140 and the image forming apparatus 100. The connection interface with the image forming apparatus 100 in the information processing apparatus 140 may take a form in which the functions of the NW I/F 244 and the video I/F 247 are combined. The connection interface with the information processing apparatus 140 in the image forming apparatus 100 may take a form in which the functions of the NW I/F 207 and the video I/F 217 are combined.

The image processing unit 208 performs processing for converting the image and document data received from the video cable 180 into print data. The printer unit 209 prints the received binary bitmap data on a recording sheet using a color material.

### Inspection Unit

The inspection unit 110 performs control for transferring the image data acquired by an image reading unit 216 to the inspection apparatus 150 described later via the communication cable 170. Then, the inspection unit 110 acquires the inspection result from the inspection apparatus 150 and transmits it to the image forming apparatus 100 and the large-capacity stacker 120. The inspection unit 110 includes a control unit 210. The control unit 210 includes a CPU 211, a RAM 212, a ROM 213, the communication I/F 214, the accessory I/F 215, and the image reading unit 216.

The CPU 211 performs control and calculation in each unit in the inspection unit 110 via an internal bus, and execution of a program stored in the ROM 213 and loaded into the RAM 212. The RAM 212 is a type of general volatile storage apparatus that can be directly accessed from the CPU 211, and is used as a work area of the CPU 211 or another temporary data storage region. The ROM 213 functions as a temporary storage region and a work memory at the time of operation of the inspection apparatus. The communication I/F 214 communicates with the inspection apparatus 150 via the communication cable 170, and communicates data such as a scanned image read by the image reading unit 216 and an inspection result. The accessory I/F 215 is connected to the accessory I/Fs 204 and 224 via the cable 280. The image reading unit 216 is an image reading unit that reads a printed material conveyed from the image forming apparatus 100.

### Large-Capacity Stacker

The large-capacity stacker 120 includes a control unit 220 and a paper discharge unit 225. The control unit 220 includes a CPU 221, a RAM 222, a ROM 223, and the accessory I/F 224. The CPU 221 performs control and calculation in each unit in the large-capacity stacker 120 via an internal bus 272, and execution of a program stored in the ROM 223 and loaded into the RAM 222. The RAM 222 is a type of general volatile storage apparatus that can be directly accessed from the CPU 221, and is used as a work area of the CPU 221 or another temporary data storage region. The ROM 223 functions as a temporary storage region and a work memory at the time of operation of the inspection apparatus. The paper discharge unit 225 performs a paper discharge operation to the main tray and the top tray, and monitoring and control of a stacking situation of each of the main tray and the top tray. The large-capacity stacker 120 may take a form of switching the paper discharge destination based on the inspection result for the printed material having been conveyed from the inspection unit 110. For example, in a case where the paper discharge destination is switched in response to the inspection result as to whether there is an abnormality in the printed material, a sheet without an abnormality is discharged to a normal stack unit, and a sheet with an abnormality is discharged to the top tray. A form in which paper is discharged to the same paper discharge destination regardless of the inspection result may be taken.

### Inspection Apparatus

The inspection apparatus 150 is an apparatus for inspecting a scanned image of the printed material obtained by the inspection unit 110. The inspection apparatus 150 includes a control unit 250 and a UI unit 257. The control unit 250 includes a CPU 251, a RAM 252, a ROM 253, a communication I/F 254, the network I/F 255, and an inspection processing unit 256. Note that the inspection apparatus 150 according to the present embodiment will be described in a form not including a printing apparatus or a reading apparatus, but may be configured integrally with these apparatuses. For example, the inspection apparatus 150 may be configured integrally with at least one of the image forming apparatus 100 and the inspection unit 110.

The CPU 251 performs control and calculation in each unit in the inspection apparatus 150 via an internal bus 275, and execution of a program stored in the ROM 253 and loaded into the RAM 252. The RAM 252 is a type of general volatile storage apparatus that can be directly accessed from the CPU 251, and is used as a work area of the CPU 251 or another temporary data storage region. The ROM 253 functions as a temporary storage region and a work memory at the time of operation of the inspection apparatus. The communication I/F 254 communicates with the inspection unit 110 via the communication cable 170, and communicates data such as a scanned image read by the image reading unit 216 and an inspection result. The network I/F 255 transmits and receives data to and from the client PC 130, the image forming apparatus 100, and the inspection apparatus 150 via the network 160. The inspection processing unit 256 inspects whether or not there is an abnormality in the printed material. The UI unit 257 is an example of a display unit, and is, for example, a liquid crystal display to be connected to the inspection apparatus, and accepts a user input to the inspection apparatus and displays a state of the inspection apparatus and an inspection result.

### Software Configuration

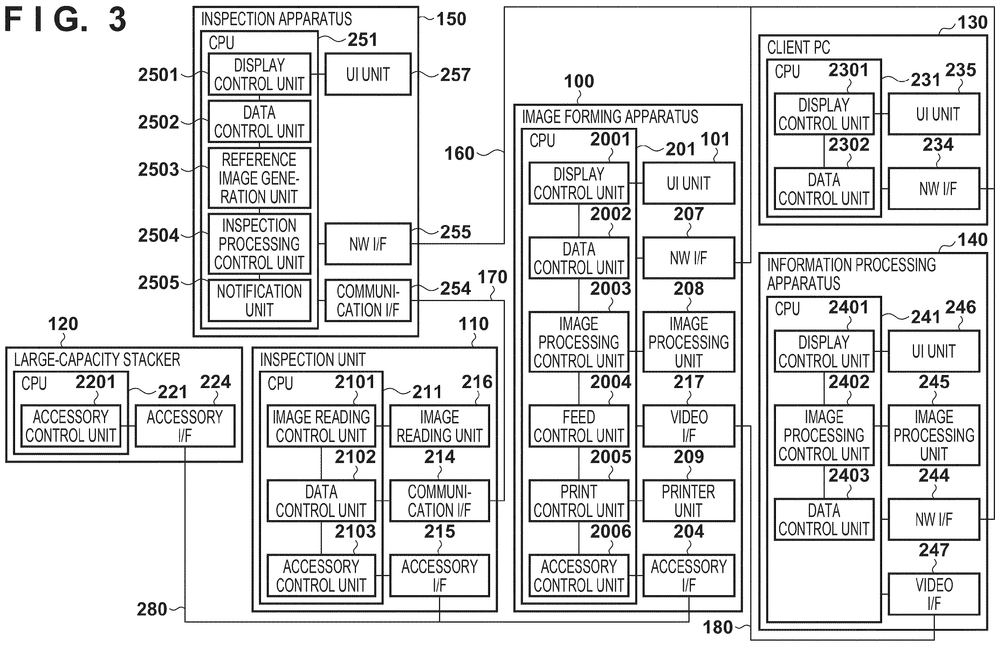

The software configuration of each apparatus according to the present embodiment will be described with reference to FIG. 3. Here, only the functional configuration related to the technique of the present disclosure will be described, and each apparatus is not configured to include only the functional configuration illustrated in FIG. 3.

### Client PC

A program of the client PC 130 is stored in the ROM 233, read into the RAM 232, and executed by the CPU 231. The processing function of the CPU 231 is configured to include a display control unit 2301 and a data control unit 2302.

The display control unit 2301 controls display of a screen to be operated by the user on the UI unit 235. The display control unit 2301 stores print setting information into the RAM 232 when the user sets a print job via the UI unit 235, and transmits execution of printing to the data control unit 2302 when the user executes printing. The print setting information is setting information such as a print paper size, single-sided printing, and double-sided printing. In addition to this, for example, setting information such as face up/face down, forward order/reverse order may be included. The data control unit 2302 transmits a print job to the information processing apparatus 140 via the NW I/F 234.

### Information Processing Apparatus

A program of the information processing apparatus 140 is stored in the ROM 243, read into the RAM 242, and executed by the CPU 241. The processing function of the CPU 241 is configured to include a display control unit 2401, an image processing control unit 2402, and a data control unit 2403.

The display control unit 2401 controls display of a screen to be operated by the user on the UI unit 246. The display control unit 2401 stores print setting information into the RAM 242 when the user sets a print job via the UI unit 246, and transmits execution of printing to the data control unit 2403 when the user executes printing.

The image processing control unit 2402 controls the image processing unit 245. Upon accepting execution of printing, the image processing control unit 2402 performs RIP processing for converting print data or document data into bitmap image data based on the print setting information stored in the RAM 242. Specifically, in a case of RIP processing for generating a reference image, for example, the resolution of 600 dpi is converted to 300 dpi to generate an image. On the other hand, in a case of RIP processing for print data, an image of 600 dpi is generated without reducing the resolution. The image processing control unit 2402 assigns a unique image ID to an RIP image in the order of printing. For example, image ID = 1 is assigned to the RIP image to be printed on the first sheet, and image ID = 2 is assigned to the RIP image to be printed on the second sheet.

The data control unit 2403 controls reception of print jobs from the client PC 130 and transmission of them to the image forming apparatus 100. The data control unit 2403 receives the print jobs from the client PC 130 via the NW I/F 244, and stores them into the RAM 242. Furthermore, the data control unit 2403 transmits a print job start notification, print setting information, and an RIP image to the image forming apparatus 100 via the NW I/F 244 and the video I/F 247. Upon receiving a registration completion notification of the reference image from the image forming apparatus 100, the data control unit 2403 subsequently transmits the print job. In order to generate a reference image, the data control unit 2403 generates a reference image parameter for each page in accordance with the print setting information. The reference image parameter includes information such as an inspection job ID, an image ID, and a paper size. The reference image parameter includes information on whether a corresponding sheet is the final sheet of the job. The data control unit 2403 transmits the generated reference image parameter to the image forming apparatus 100.

### Image Forming Apparatus

A program of the image forming apparatus 100 is stored in the ROM 203, read into the RAM 202, and executed by the CPU 201. The processing function of the CPU 201 is configured to include a display control unit 2001, a data control unit 2002, an image processing control unit 2003, a paper feed control unit 2004, a print control unit 2005, and an accessory control unit 2006.

The display control unit 2001 displays a screen to be operated by the user on the UI unit 101. When the user sets an additional print job via the UI unit 101, the display control unit 2001 stores the print setting information into the RAM 202 in addition to the setting in the information processing apparatus 140. The setting of the print job in the image forming apparatus 100 is insertion setting of an interleaf such as a job-to-job partition sheet or a set-to-set partition sheet, a paper setting, and the like. When printing is paused or resumed, execution of printing is transmitted to the data control unit 2002.

The data control unit 2002 controls reception of a print job and a notification from the information processing apparatus 140 and transmission of them to the inspection apparatus 150. Upon accepting a print job start notification from the information processing apparatus 140, the data control unit 2002 stores, into the RAM 202, the print setting information and the RIP image received via the NW I/F 207 and the video I/F 217. In a reference image registration job, the RIP image and the reference image parameter generated and transmitted by the data control unit 2403 of the information processing apparatus 140 are transmitted to the inspection apparatus 150 via the NW I/F 207. When the generation of the reference image is completed in the inspection apparatus 150 and a registration completion notification of the reference image is received, the registration completion notification is transmitted to the information processing apparatus 140. Furthermore, in the present print job, image allocation information described later is transmitted. A start notification of an inspection job is transmitted. The reference image parameter includes information based on print setting information. On the other hand, the image allocation information includes, in addition to information such as single-double information (single-sided printing/double-sided printing) based on the print setting information, rotation, a shift amount, a print surface (front/rear), and a sheet number to be determined by the print control unit 2005 when printing is actually performed on paper. Examples of these pieces of image allocation information may include other information, and are not limited to this.

The image processing control unit 2003 controls the image processing unit 208. The print processing information and the RIP image stored in the RAM 202 are acquired, and image processing of converting them into print data is performed. The image processing of converting into print data means, for example, rasterizing PDL data, converting into multivalue bitmap data, and performing screen processing or the like, thereby converting into binary bitmap data. The binary bitmap data obtained here is transmitted to the printer unit 209 via the engine I/F 205.

The paper feed control unit 2004 controls the paper feed deck 260 via the paper feed deck I/F 206. Paper is conveyed from the paper feed deck 260 to the printer unit 209 based on the print processing information stored in the RAM 202. The print control unit 2005 controls the printer unit 209 via the engine I/F 205. The print control unit 2005 issues an instruction to the printer unit 209 so as to print the bitmap data transmitted from the image processing control unit 2003 on the paper for which a conveyance instruction has been issued by the paper feed control unit 2004 based on the print processing information. Upon accepting a notification of pausing and resumption of printing from the accessory control unit 2006 described later, the print control unit 2005 instructs the printer unit 209 to stopping and resumption of printing based on the notification.

The accessory control unit 2006 notifies the large-capacity stacker 120 of the paper discharge destination via the accessory I/F 204 based on the print setting information stored in the RAM 202. Furthermore, the accessory control unit 2006 receives a pausing/resumption notification of printing from the inspection unit 110, and notifies the print control unit 2005.

### Inspection Unit

A program of the inspection unit 110 is stored in the ROM 213, read into the RAM 212, and executed by the CPU 211. The processing function of the CPU 211 is configured to include an image reading control unit 2101, a data control unit 2102, and an accessory control unit 2103.

The image reading control unit 2101 controls the image reading unit 216. The image reading unit 216 has a photographing function equipped with a contact image sensor (hereinafter, CIS), for example, and photographs paper (hereinafter, scanned image) passing through inside the inspection unit. Note that the CIS with respect to the image reading unit 216 is an example of a sensor, the sensor may be of another type such as a CCD image sensor, and a photographing method thereof is not limited.

The data control unit 2102 transmits the scanned image to the inspection apparatus 150 via the communication I/F 214. Setting information on an inspection operation mode described later set by the inspection apparatus 150 is received and stored in the RAM 212. Furthermore, reception of a result of the inspection to be performed by the inspection apparatus 150 is performed.

The accessory control unit 2103 performs a control notification of the image forming apparatus 100 and the large-capacity stacker 120 via the accessory I/F 215 in accordance with the inspection result received by the data control unit 2102 and the setting information on the inspection operation mode. In a case of taking a form in which the paper discharge destination is switched based on the inspection result, the large-capacity stacker 120 is notified to discharge the printed material without an abnormality to the main tray of the paper discharge unit 225 and to discharge the printed material with an abnormality to the top tray of the paper discharge unit 225. In a case of setting to pause printing in a case where a certain number of printed materials having abnormality are continuous, a notification to stop printing is transmitted to the image forming apparatus 100 when the certain number is reached.

### Inspection Apparatus

A program of the inspection apparatus 150 is stored in the ROM 253, read into the RAM 252, and executed by the CPU 251. The processing function of the CPU 251 is configured to include a display control unit 2501, a data control unit 2502, a reference image generation unit 2503, an inspection processing control unit 2504, and a notification unit 2505.

The display control unit 2501 displays a screen with respect to the UI unit 257. The display control unit 2501 controls display of an inspection result performed by the inspection processing control unit 2504 described later and stored in the RAM 252 and display of a screen to be operated by the user. When the user performs an inspection setting using the UI unit 257, the display control unit 2501 stores the inspection setting information into the RAM 252.

The data control unit 2502 receives the RIP image, the reference image parameter, and the image allocation information from the image forming apparatus 100 through the NW I/F 255, and stores them into the RAM 252. When a start notification of the inspection job is received, a new inspection job is generated and stored in the RAM 252. The data control unit 2502 stores, into the RAM 252, the scanned image sent via the communication I/F 254. Furthermore, the data control unit 2502 notifies the inspection unit 110 of the inspection result in the inspection processing control unit 2504 and the inspection setting information stored in the RAM 252. Upon receiving a registration completion notification from the reference image generation unit 2503 described later, the data control unit 2502 notifies the image forming apparatus 100 of registration completion.

The reference image generation unit 2503 stores the inspection setting accepted at the UI unit 257 into the RAM 252 in association with the reference image. When the inspection method is RIP inspection, a reference image is generated from the RIP image, the reference image parameter, and the image allocation information stored in the RAM 252, and is stored into the RAM 252 as a reference image. Furthermore, it is determined whether it is a final sheet from the reference image parameter. The inspection processing control unit 2504 controls the inspection processing unit 256.

Here, an outline of the print image inspection will be described. First, a scanned image stored in the RAM 252 and a corresponding reference image are read, and inspection is performed by comparison. Specifically, feature points are extracted from each of the reference image and the scanned image, and the reference image and the scanned image are aligned based on the extracted feature points. When the difference between the pixel value (luminance value) of an inspection target pixel in the aligned scanned image and the pixel value (luminance value) of a comparison target pixel in the reference image is equal to or less than a threshold, the inspection target pixel is determined to be passing (normal). Note that the threshold is different for each inspection level. In this inspection, the inspection proceeds for each reference image corresponding to the scanned image. Note that if a misalignment in the print position beyond a predetermined threshold with respect to the reference image at the time of performing alignment, it is determined to be failing (abnormal) in the misalignment inspection.

If the inspection of all pixels ends, it is determined whether the sum of the pixels determined to be failing is equal to or less than a passing threshold, and it is determined whether or not the scanned image is normal. If the sum of the pixels determined to be failing is equal to or less than the passing threshold, the scanned image is determined to be normal. If the sum of the pixels determined to be failing exceeds the passing threshold, the scanned image is determined to be not normal. Furthermore, inspection results such as information on whether or not there is an abnormality in the printed material, a type (spot or streak) of the detected abnormality, and position information on the abnormality are stored in the RAM 252. It is determined whether it is a final sheet from the image allocation information. Determination and processing of the inspection operation mode accepted by the display control unit 2501 are also performed.

Next, an outline of the data inspection will be described. The inspection processing control unit 2504 performs processing of extracting data from a character string, a barcode, or a QR code (registered trademark) in a scanned image stored first in the RAM 252. This is performed using a preset character shape font for character recognition (OCR) or a standard of a barcode, and OCR processing is performed on a character and decoding processing is performed on a barcode. The character shape font is data in which a character shape image of a character and a character code are associated with each other, the data necessary for OCR at the time of performing a data inspection and a matching inspection described later. By scanning character shapes printed on paper, cutting out them one by one, and inputting a character code for the cut out character image by the user, it is possible to create a character shape font. The created character shape font is stored in the RAM 252 of the inspection apparatus 150. Here, a creation method for a character shape font in the present embodiment has been described, but the present disclosure is not limited to this, and any method may be adopted as long as data in which a character code is associated with each character image cut out from a scanned image can be created.

In the data inspection, an inspection on whether a character string or a barcode in a region set so as to perform the data inspection is readable is performed. It is determined as passing if it is readable, and it is determined as failing if it is unreadable. It is also possible to perform a data comparison inspection for comparing whether the result of the read character string or barcode that is the extracted data matches the corresponding data (correct answer data) of a correct answer CSV file prepared in advance. Here, as a result of the comparison, it is determined as passing if the data matches, and it is determined as failing if the data does not match. The result of the performed inspection is stored in the RAM 252, and for example, a result of a character string or a barcode read from a printed material, a comparison result with correct answer data, position information on the read character or the barcode when displayed on the UI unit 257, and the like are stored.

Furthermore, an outline of the matching inspection will be described. Similarly to the data inspection described above, extraction processing of a character string, a barcode, and a QR code (registered trademark) from the scanned image is performed. In the matching inspection, it is determined whether the data extracted from all the regions to be matching targets are matched. It is determined as passing if they match, and it is determined as failing if they mismatch. The result of the performed inspection is stored in the RAM 252, and for example, a result of a character string or a barcode read from a printed material, a result of matching or mismatching of data, position information on the read character or the barcode when displayed on the UI unit 257, and the like are stored. After completion of the print image inspection, the data inspection, and the matching inspection, the display control unit 2501 instructs the UI unit 257 to display the inspection result stored in the RAM 252. By the inspection result being displayed on the UI unit 257, the user can recognize the inspection result. The notification unit 2505 notifies the inspection unit 110 via the communication I/F 254. The inspection operation mode and the inspection result in the inspection processing control unit 2504 stored in the RAM 252 are transmitted to the inspection unit 110.

### Large-Capacity Stacker

A program of the large-capacity stacker 120 is stored in the ROM 223, read into the RAM 222, and executed by the CPU 221. The processing function of the CPU 221 is configured to include an accessory control unit 2201.

The accessory control unit 2201 controls the paper discharge unit 225. A paper discharge notification from the image forming apparatus 100 or the inspection unit 110 is received, and paper is discharged to the main tray or the top tray of the paper discharge unit 225 based on the notification content. In order to notify that the printed material has been discharged without causing a paper jam in the image forming apparatus 100, the inspection unit 110, and the large-capacity stacker 120, an external discharge notification is transmitted to the image forming apparatus 100 and the inspection unit 110 when paper discharge is completed.

### Job Setting

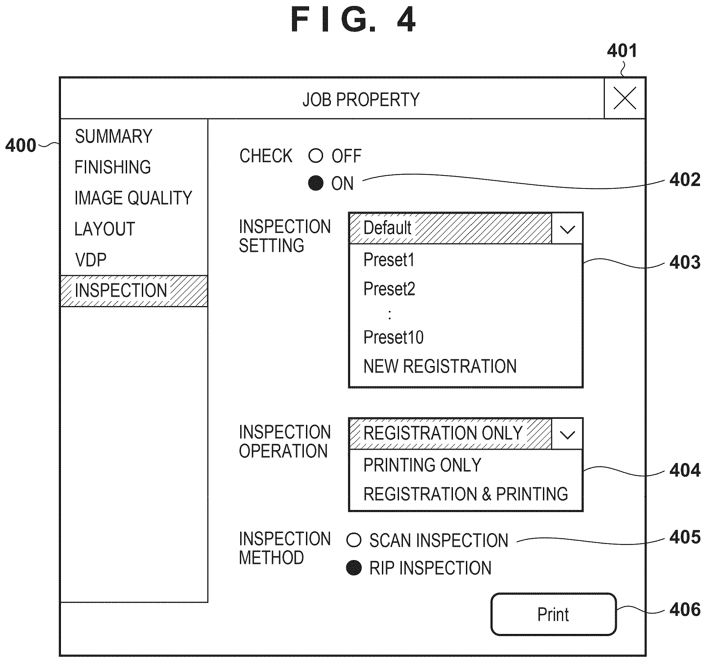

A setting method for an inspection job according to the present embodiment will be described with reference to FIG. 4. An inspection method selection screen 400 is an example of a screen for accepting a print job setting from the user in the client PC 130. The display control unit 2301 to be executed by the CPU 231 performs display on the UI unit 235, accepts and stores, into the RAM 232, input from the user. The print job generated by the client PC 130 is transmitted to the information processing apparatus 140 and managed.

When the user selects the inspection "ON" in an inspection mode setting unit 402 of the inspection method selection screen 400, the setting of the property is continuously performed. Here, the print job set as the inspection "ON" is referred to as an "inspection job". Note that if "OFF" is selected, 403 to 405, for example, may be displayed as grayed out so as not to accept user's selection. When the inspection "OFF" is selected, the print job is treated as a normal print job that is not inspected. When a print button 406 is operated, the print control unit 2005 of the image forming apparatus 100 performs a normal printing operation.

In an inspection setting unit 403, the user selects a setting method for a region to be inspected and a level thereof. When "Default" is selected, the inspection processing control unit 2504 of the inspection apparatus 150 performs inspection of the entire surface of the image at a standard level. When "Preset 1" to "Preset 10" are selected, the inspection processing control unit 2504 performs inspection based on the region and the level designated in advance. The inspection settings of "Preset 1 to 10" are stored in the RAM 252 of the inspection apparatus 150, and when the print button 406 is operated, the reference image generation unit 2503 reflects the inspection setting on the reference image.

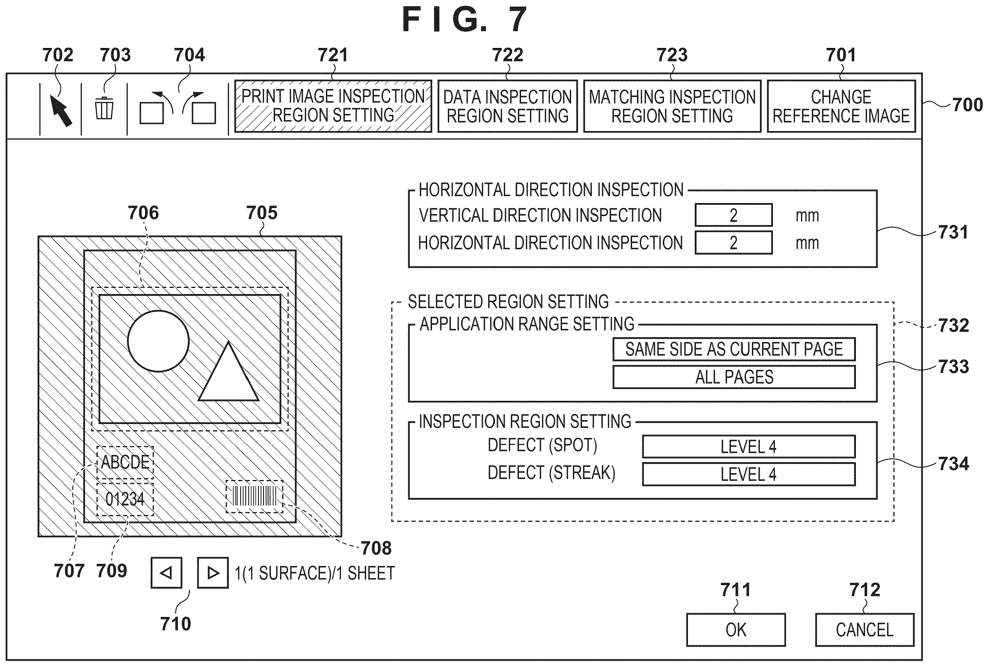

When "new registration" is selected, the user newly creates an inspection setting, and the inspection processing control unit 2504 performs inspection based on the setting. When "new registration" is selected, the display control unit 2501 of the inspection apparatus 150 displays an inspection setting screen 700 illustrated in FIGS. 7, 12, and 13 on the UI unit 257 when the acceptance of the reference image is completed. Detailed description of FIGS. 7, 12, and 13 will be described later. The user newly creates an inspection setting for the reference image, and the inspection processing control unit 2504 of the inspection apparatus 150 performs inspection based on the setting. Note that when "Default" or "Preset 1 to 10" is selected by the inspection setting unit 403 and the print button 406 is operated, the display control unit 2501 does not display the inspection setting screen 700. When the print button 406 on the inspection method selection screen 400 is operated by the user operation, the inspection apparatus 150 registers the reference image without another additional operation when the acceptance of the reference image is completed.

In an inspection operation setting unit 404, the user selects a combination of registration of the reference image and the printing operation of the present print job. When "registration only" is selected, the reference image generation unit 2503 of the inspection apparatus 150 performs only registration of the reference image and inspection setting thereof. When "printing only" is selected, printing by the print control unit 2005 of the image forming apparatus 100 and inspection by the inspection processing control unit 2504 of the inspection apparatus 150 are performed using a reference image registered in advance. When "registration & printing" is selected, the operation of "registration only" and the operation of "printing only" described above are continuously performed.

When "scan inspection" is selected in an inspection method selection unit 405, the reference image generation unit 2503 of the inspection apparatus 150 uses a scanned image of the printed material as a reference image to be used for inspection. When "RIP inspection" is selected, the reference image generation unit 2503 of the inspection apparatus 150 sets the RIP image to be used for printing by the image forming apparatus 100 as a reference image.

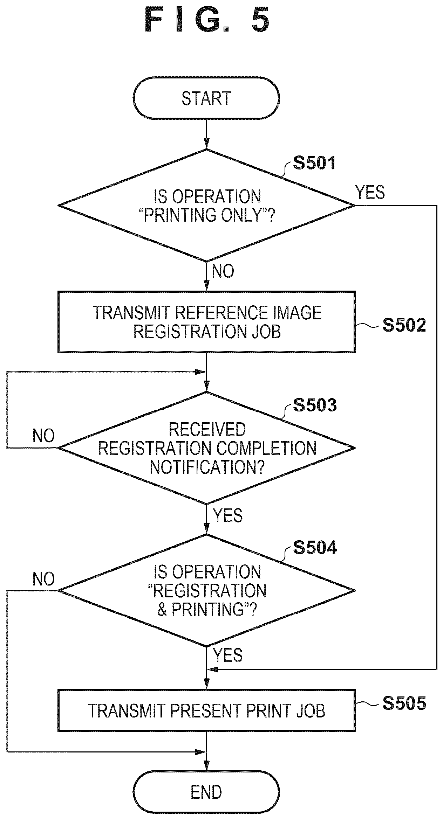

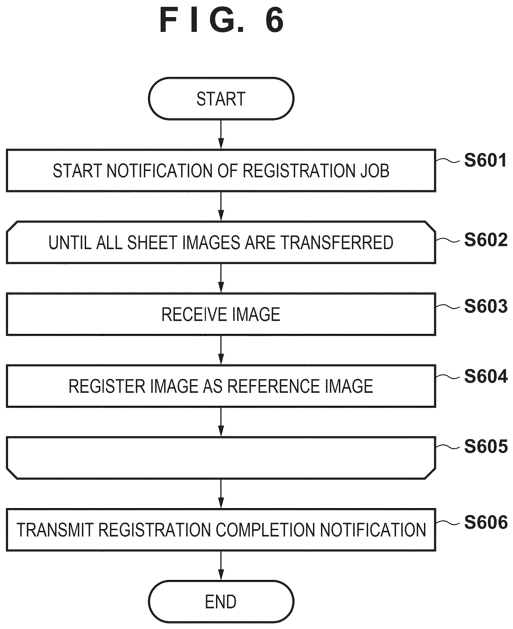

Generation and storage processing of the reference image will be described later with reference to the flowchart of FIG. 6. Finally, when the print button 406 is operated, the display control unit 2301 stores the settings input to 402 to 405 into the RAM 232. The data control unit 2302 to be executed by the CPU 231 of the client PC 130 transmits the print job to the information processing apparatus 140. The data control unit 2403 to be executed by the CPU 241 of the information processing apparatus 140 controls execution of printing and inspection based on print setting information on the accepted print job. Details of printing and the operation of inspection in accordance with the setting will be described later with reference to FIG. 5. When a close button 401 is operated, the screen is closed without saving the setting of the present screen into the RAM 232.

### Job Execution Flow

A processing procedure of job execution in the information processing apparatus 140 according to the present embodiment will be described with reference to FIG. 5. The processing described below is realized by, for example, the CPU 241 of the information processing apparatus 140 developing, into the RAM 242, a program code stored in the ROM 243, reading and executing the program code developed into the RAM 242. The number following "S" described below is a step number indicating the processing order of each flowchart.

In S501, the CPU 241 causes the data control unit 2403 to determine whether or not the setting value set by the inspection operation setting unit 404 illustrated in FIG. 4 is "printing only". The process proceeds to S505 if the setting value is set as "printing only", and the process proceeds to S502 if the setting value is set to other than "printing only".

In S502, the data control unit 2403 transmits a reference image registration job to the image forming apparatus 100. Here, the data control unit 2403 transmits an RIP image serving as a reference image, various print setting information, and the like. Subsequently, in S503, the data control unit 2403 determines whether or not a notification of registration completion has been received from the data control unit 2502 executed by the CPU 251 of the inspection apparatus 150. The process proceeds to S504 if there is a notification of registration completion, and the process stands by if there is no notification of registration completion.

In S504, the data control unit 2403 determines whether or not the setting value set by the inspection operation setting unit 404 illustrated in FIG. 4 is "registration & printing". The process proceeds to S505 if "registration & printing" is set (YES in S504), and the processing of the present flowchart is ended if "registration only" is set (NO in S504).

In S505, the data control unit 2403 transmits the present print job for inspection to the image forming apparatus 100. Here, an RIP image for printing on paper, various print setting information, and the like are transmitted to the image forming apparatus 100, and the processing of the present flowchart is ended.

### Registration Processing of Reference Image

With reference to FIG. 6, a processing procedure of the inspection apparatus 150 when registering a reference image of the inspection according to the present embodiment will be described. The processing described below is realized by, for example, the CPU 251 of the inspection apparatus 150 developing, into the RAM 252, a program code stored in the ROM 253, reading and executing the program code developed into the RAM 252. Although the flow is common between scan inspection and RIP inspection, the generation method for an image of a reference image is different depending on two inspection methods of the scan inspection and the RIP inspection.

The data control unit 2502 executed by the CPU 251 of the inspection apparatus 150 in S601 receives a start notification of the registration job of the reference image from the image forming apparatus 100. Subsequently, in S602, the data control unit 2502 repeats the processing of S603 and S604 described below until the reference images of all sheets are stored in the RAM 252 of the inspection apparatus 150.

In S603, if the inspection method is the scan inspection, the data control unit 2502 receives an image scanned by the image reading unit 216 of the inspection unit 110. If the inspection method is the RIP inspection, the data control unit 2502 receives the RIP image and the reference image parameter generated by the image processing control unit 2402 of the information processing apparatus 140, and receives print setting information from the image forming apparatus 100. The print setting information may take a form of being received from the information processing apparatus 140 or the client PC 130.

Next, in S604, the reference image generation unit 2503 registers the image received in S603 into the RAM 252 as a reference image. Here, if the inspection method is the RIP inspection, the reference image generation unit 2503 processes the RIP image using the received reference image parameter. The process of the RIP image is processing of converting the RIP image into an image format conforming to a scanned image described later to be read at the time of inspection, or converting the image size from the paper size or the number of pixels included in the reference image parameter. The reference image generation unit 2503 performs this process using a reference image parameter having an image ID that matches the image ID assigned to the RIP image. The data control unit 2502 stores the print setting information, the processed RIP image, and the reference image parameter into the RAM 252. If the inspection method is the scan inspection, the reference image generation unit 2503 assigns image IDs in the order of image ID = 1 to the front surface of the first sheet, image ID = 2 to the rear surface of the first sheet, and image ID = 3 to the front surface of the second sheet with respect to the scanned image received by the data control unit 2502.

The processing of S602 to S605 is repeated until the reference image generation unit 2503 determines that the reference image registration of all the sheets of paper has ended in S605. The processing is repeated until printing is completed if the inspection method is the scan inspection, and until the data control unit 2502 receives a notification of information indicating that the page is the final page included in the reference image parameters if the inspection method is the RIP inspection. When the reference image generation unit 2503 determines that the registration of all the reference images has been ended, the process proceeds to S606, and the data control unit 2502 notifies the image forming apparatus 100 of completion of the reference image registration, and ends the processing of the present flowchart. Note that if the inspection method is the scan inspection, for example, the inspection apparatus 150 may take a form of reading a plurality of images for an identical page, and registering a synthesis result thereof as a reference image.

### Inspection Setting

The inspection setting according to the present embodiment will be described with reference to FIGS. 7, 12, and 13. FIG. 7 is an example of the inspection setting screen 700 to be displayed on the UI unit 257 by the display control unit 2501 of the inspection apparatus 150 for performing an inspection setting. The inspection setting screen 700 is configured to include buttons 701 to 704, 711, 712, and 721 to 723, a region 705, a setting item 731, and a setting region 732.

The button 701 is a change button of the reference image, and is a button used when the reference image is changed. The button 702 is a selection button of the inspection region, and is a button to be operated by the user when it is desired to select a region having been already set. The button 703 is a delete button of the inspection region, and is a button to be operated by the user when it is desired to delete the selected region. The button 704 is a button for rotating the image displayed in the region 705.

The region 705 is a display region for displaying a reference image having been read. If there are a plurality of sheets to be read, an image to be displayed in the region 705 can be switched by a button 710.

The button 711 is an OK button for storing the setting of the screen 700. Upon accepting the operation on the OK button 711, the reference image generation unit 2503 stores the reference image and the inspection setting into the RAM 252. The button 712 is a cancel button for instructing cancelation of the inspection job without saving the setting of the screen 700.

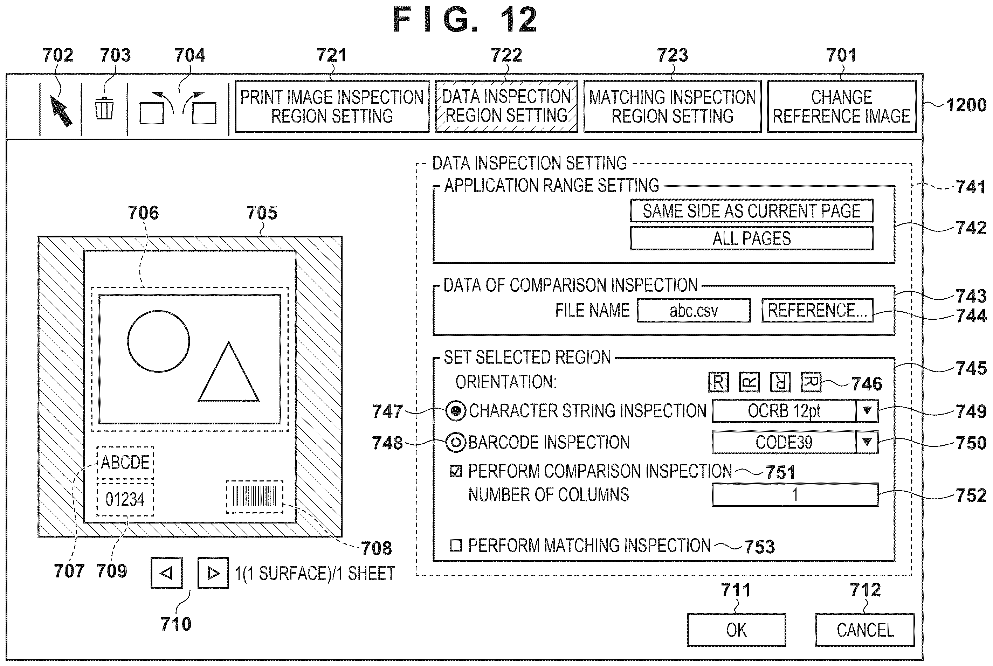

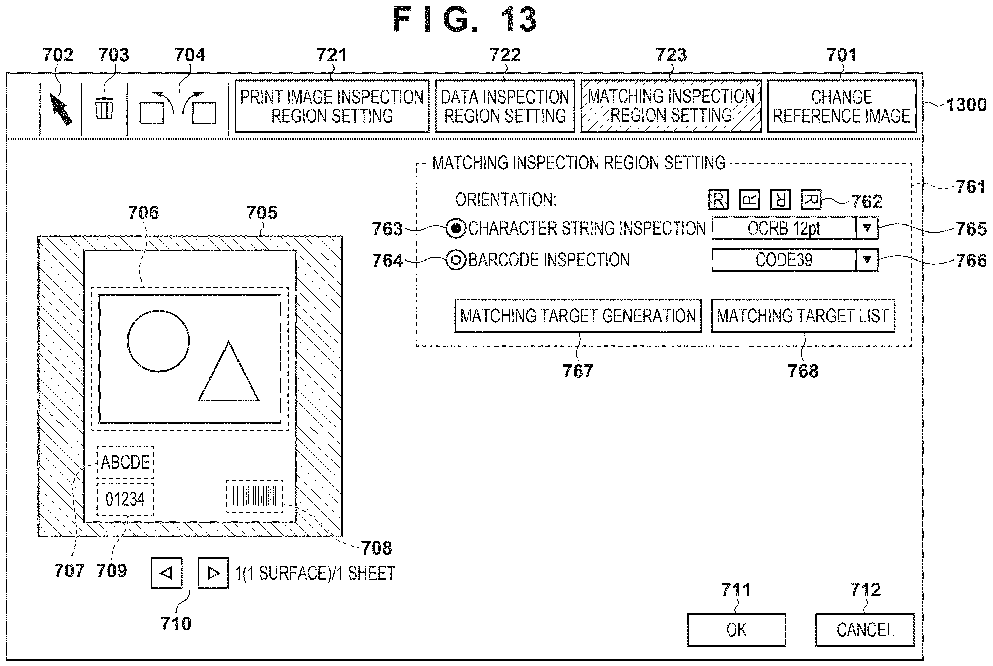

The button 721 is a button to be operated by the user when newly creating a print image inspection region. After the button operation, the user sets an inspection region with respect to the reference image displayed in the region 705. A region 706 indicates a setting example of the print image inspection region. The button 722 is a button to be operated by the user when newly creating a data inspection region. The data inspection is a character inspection or a barcode inspection. After the button operation, the user sets an inspection region on the reference image displayed in the region 705. A region 707 indicates a setting example of a character inspection region. A region 708 indicates a setting example of a barcode inspection region. The setting of the data inspection region will be described with reference to FIG. 12. The button 723 is a button to be operated by the user when newly creating a matching inspection region. After the button operation, the user sets an inspection region on the reference image displayed in the region 705. A region 709 indicates a setting example of the matching inspection region and corresponds to the first region. The setting of the matching inspection region, which is a feature in the technique of the present disclosure, will be described in detail with reference to FIG. 13.

Note that in FIG. 7, the region 706, the region 707, the region 708, and the region 709 are illustrated with dotted lines of the same color of the same type, but may be displayed in different line types so that it can be identified that different processings are performed in the regions. For example, the frame of the region where the different processing is performed is displayed in a different color or a one-dot chain line. The display color of the frame may be selectable by the user.

Other than the above-described print image inspection, character inspection, barcode inspection, and matching inspection, a sequential number inspection may be performed. The sequential number inspection is to inspect that a character string in a region present in a plurality of reference images has regularity. After accepting the inspection region from the user, a predetermined rule desired to inspect is accepted. The predetermined rule is a start number, an end number, a number of increases/decreases, an offset, and the like. For example, the number of increases/decreases indicates an increasing/decreasing value, and the offset indicates an increasing/decreasing page interval. Of course, another parameter may be set as a predetermined rule.

The setting item 731 is a setting of the misalignment inspection, and sets an allowable misalignment amount of the print position from the reference image. In the present embodiment, an example designated by the user is shown for a case of detecting a misalignment of the misalignment amount of 2 mm or more. That is, the value designated by the user here corresponds to a threshold in misalignment detection. When the misalignment of the set threshold or more is detected, it is determined as inspection NG (abnormal).

The setting region 732 is a group of Uls for performing a setting with respect to the region currently being selected in the region 705. A setting item 733 sets an application range of the region being selected. If nothing is selected, the inspection region being selected is arranged only on the page currently displayed in the region 705. When "same side as current page" is selected, the inspection region being selected is arranged on the page of the same surface depending on which of the front surface and the rear surface of the sheet the inspection region being selected is arranged on. Note that in the case of the RIP inspection, since the reference image is managed not in units of sheets but in units of pages, "odd-numbered pages or even-numbered pages" may be adopted in the setting of the application range. When "all pages" is selected, the inspection region being selected is arranged in all the pages.

A setting item 734 is a setting of an abnormality (spot) having a round shape or an abnormality (streak) having a linear shape, and sets each detection level. The detection level is a parameter that is set for each stage from which magnitude the abnormality is determined for each feature of the detected abnormality. For example, there are five stages from level 1 to level 5, and an abnormality thinner and smaller in size can be detected in level 5 than level 1. Note that there is no intention to limit the detection level of the present disclosure to five stages, and two stages, three stages, seven stages, or the like may be applied. Alternatively, it may be changed in an analog manner by input via an adjustment bar. A level can be set for each inspection item, such as a spot for the inspection level 5 and a streak for the inspection level 4. The setting item 734 indicates that the user has selected level 4 for the inspection level setting of the abnormality (spot) and level 4 for the inspection level setting of the abnormality (streak).

### Inspection Setting of Data Inspection Region

FIG. 12 illustrates an example of an inspection setting screen 1200 to be displayed when the button 722 is operated to set the data inspection region. Here, a difference from the inspection setting screen 700 will be mainly described.

A setting region 741 is a group of Uls for performing a setting with respect to the data inspection region to be displayed when the data inspection region is selected in the region 705. Here, the explanation will be given on an assumption that the region 707 is selected as a region currently being selected. Note that it is assumed that in the region 705, the region being selected is displayed distinguishably from the region not being selected.

A setting region 742 sets an application range of the region being selected. If nothing is selected, the inspection region being selected is arranged only on the page currently displayed in the region 705. When "same side as current page" is selected, the inspection region being selected is arranged on the page of the same surface depending on which of the front surface and the rear surface of the sheet the inspection region being selected is arranged on. When "all pages" is selected, the inspection region being selected is arranged in all the pages.

A setting region 743 is a region for setting a correct answer CSV file to be compared when a comparison inspection is performed. A file is selected by operating a button 744, and the selected file name is displayed. Designation of the correct answer CSV file is common in the character inspection and the barcode inspection.

In a setting region 745, a data inspection region currently being selected is set. Here, selection of the orientation and the character region or the barcode inspection region, designation of the font type, the barcode type, and the presence/absence of the comparison inspection, and the column designation of the correct answer CSV file at the time of the comparison inspection are performed. A setting item 746 sets the orientation of the character in the region 707. A setting item 747 and a setting item 748 designate whether the region being selected is for the character string inspection or the barcode inspection. Only one of the setting items 747 and 748 can be selected. In a setting item 749, a font for performing OCR processing of the region 707 is set if the character string inspection is selected in the setting item 747. If the setting item 747 is not selected, the selection item 749 may be displayed as grayed out so as not to be operable. In a setting item 750, the type of barcode for decoding the region 707 is set if the barcode inspection is selected in the setting item 748. If the setting item 748 is not selected, the selection item 750 may be displayed as grayed out so as not to be operable. In the setting item 751, the presence/absence of performing of the comparison inspection is set. If the comparison inspection is set to "present", the OCR processing of the region 707 is performed using the correct answer CSV file designated in the setting region 743 and the column number to be designated in a setting item 752, and the comparison inspection between the read character string and the character string designated by the correct answer CSV is performed.

### Inspection Setting of Matching Inspection Region

FIG. 13 illustrates an example of an inspection setting screen 1300 to be displayed when the button 723 is operated and the matching inspection region is set. Here, a difference from the inspection setting screen 700 will be mainly described. The matching inspection is an inspection as to whether reading results of two or more inspection regions match each other. It is inspected as to whether, for example, the reading results of both regions of the region (first region) 709 of the first page and a matching inspection region (second region) to be a matching target set in the second page different from the first page match each other.

A setting region 761 is a UI group for performing a setting with respect to the matching inspection region to be displayed when the matching inspection region is selected in the region 705. Here, the explanation will be given on an assumption that the region 709 is selected as a region currently being selected.

In the region 761, a matching inspection region currently being selected is set. Here, selection of the orientation and the character region or the barcode inspection region, and designation of the font type and the barcode type are performed. A setting item 762 sets the orientation of the region 709. A setting item 763 and a setting item 764 designate whether the region being selected is for the character string inspection or the barcode inspection. Only one of the setting items 763 and 764 can be selected. In a setting item 765, a font for performing OCR processing of the region 709 is set if the setting item 763 is selected. If the setting item 763 is not selected, the selection item 765 may be displayed as grayed out so as not to be operable. In a setting item 766, the type of barcode for decoding the region 709 is set if the setting item 764 is selected. If the setting item 764 is not selected, the selection item 766 may be displayed as grayed out so as not to be operable.

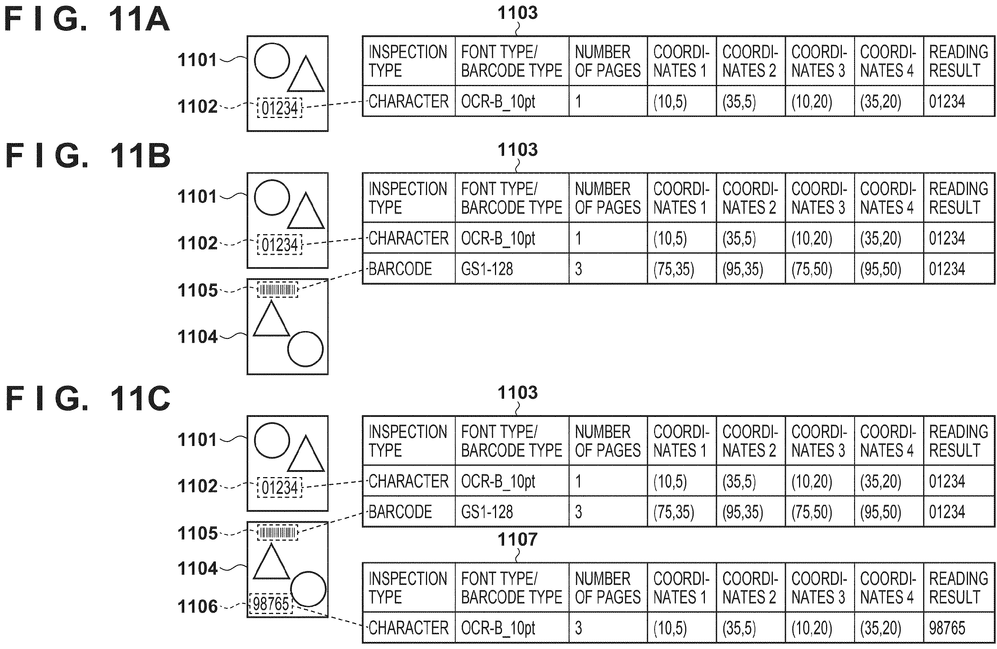

Here, the matching inspection region information indicating the matching inspection region according to the present embodiment will be described. When a matching inspection region is created, the reference image generation unit 2503 to be executed by the CPU 251 of the inspection apparatus 150 stores, into the RAM 252, matching inspection region information (the number of pages of the reference image, the coordinate information on the region, the orientation, and the font type or the barcode type). FIGS. 11A to 11C are examples of the matching inspection region set in the reference image and the table stored in the RAM 252. FIG. 11A is an example of the inspection setting screen 1300 in a state where one matching inspection region is created for the reference image and a table to be stored in the RAM 252. An reference image 1101 indicates an inspection target image to be displayed in the region 705 of the inspection setting screen 1300. When a matching inspection region 1102 is generated in this reference image 1101, the reference image generation unit 2503 to be executed by the CPU 251 of the inspection apparatus 150 newly creates and stores, into the RAM 252, a table 1103. The table 1103 defines the inspection type "character", the font type/barcode type "OCR-B_10 pt", the number of pages "1", coordinates 1 to 4 that are four vertices of a rectangular inspection region, and the reading result "01234".

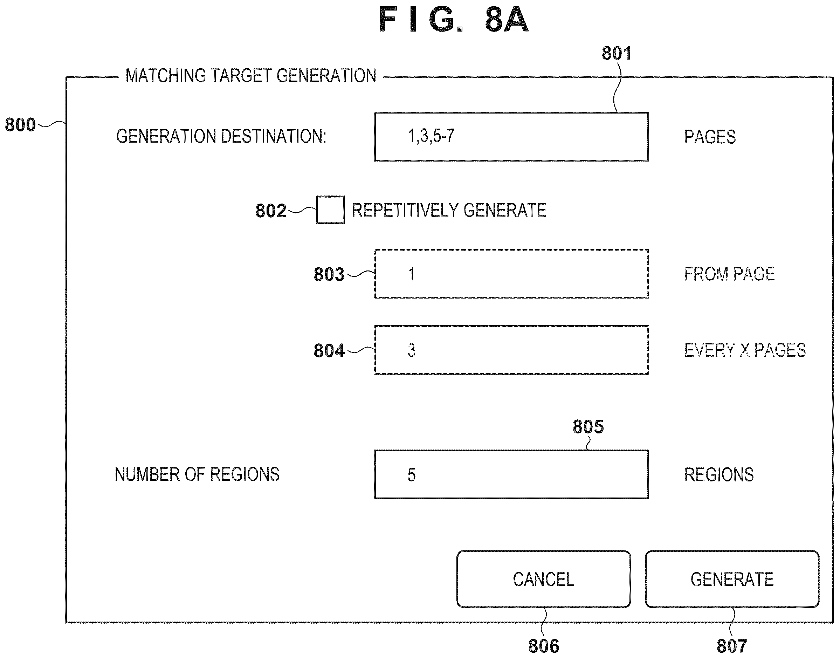

The description returns to FIG. 13. A button 767 is an example of a display object, is a button for generating a target region for performing the matching inspection region, and transitions to a matching target generation setting screen 800 illustrated in FIG. 8A. In the matching inspection, it is necessary to generate a matching target at an arbitrary page and an arbitrary position in order to inspect that data in two or more regions match.

FIG. 8A is an example of the matching target generation setting screen 800 to be displayed on the UI unit 257 by the display control unit 2501 of the inspection apparatus 150 when the button 767 is operated and the target region of the matching inspection region is set. In a text box 801, the number of pages for which generation of a matching target is desired can be designated. A single number of pages may be input, and input for designating each single page number such as "1, 3, 5", input for designating a page range including a plurality of pages such as "5-9", or input of a combination thereof can be performed. A text box 805 sets the number of matching inspection regions to be generated. When a button 806 is operated, the matching target generation setting screen 800 is closed, the information input to the text box 801 and the text box 805 are not stored, and the screen returns to the inspection setting screen 1300. On the other hand, when a button 807 is operated, a predetermined number of regions are generated in a reference image of a predetermined page based on the information accepted in the text box 801 and the text box 805.

A specific use case will be described. For example, when it is desired to inspect that a plurality of data existing on an identical surface match one another, for example, when it is desired to inspect that five data existing on page 3 match, a matching inspection region is first created on page 3 on the inspection setting screen 1300. Thereafter, the button 767 is operated and "3" is input to the text box 801 and "4" is input to the text box 805, whereby four matching inspection regions are additionally created on page 3, and a total of five are set.

When the display control unit 2501 accepts the creation of the matching inspection region of the matching target, the reference image generation unit 2503 adds, to the table, and stores, into the RAM 252, the matching inspection region information in which the region is set. FIG. 11B illustrates an example of the inspection setting screen 1300 in a state where the matching inspection region of the matching target is created for different reference images after FIG. 11A and a table to be stored in the RAM 252.

When a matching inspection region 1105 of a matching target is created on a reference image 1104, the reference image generation unit 2503 adds, to the table 1103, and stores, in the RAM 252, the matching inspection region information on the matching inspection region 1105. Note that in the inspection setting stage, the column of the reading result is blank, and is in a state where nothing is stored.

At the time of inspection, a matching inspection between regions stored in the same table is performed. In the example of FIG. 11B, the information on the matching inspection region 1102 and the matching inspection region 1105 are stored in the table 1103, and the matching inspection of these two regions is performed. The matching inspection regions 1102 and 1105 have different inspection types of the character and the barcode, but content "01234" of the information is the same, and thus they are matching inspection targets. In this manner, according to the present embodiment, it is possible to handle combinations of matching inspections regardless of whether the inspection types are the same or different.

When matching inspection regions of different matching target are created, the reference image generation unit 2503 adds, to the new table, and stores, into the RAM 252, the matching inspection region information. FIG. 11C illustrates an example in which matching inspection regions of different matching targets exist in the reference image 1104. FIG. 11C illustrates an example of a state after FIGS. 11A and 11B. When a new matching inspection region 1106 is created in the reference image 1104, which is the reference image of page 3, the reference image generation unit 2503 adds, to a table 1107, and stores, into the RAM 252, the matching inspection region information on a matching inspection region 1106. When the matching target of the matching inspection region 1106 is generated, the matching inspection region information on the region is stored in the table 1107. In this manner, the matching inspection is performed between the regions stored in the same table.

Here, an example of performing the matching inspection of the regions stored in the same table has been described, but the reference image generation unit 2503 may take a form of, for example, assigning an ID to the region and performing the matching inspection of the regions having the same ID. In this case, for example, the region ID = 1 is assigned to the matching inspection region first created and all the matching target regions thereof, and when the user newly creates a matching inspection region, the region ID = 2 is assigned to this matching inspection region. The region ID = 2 is assigned to the matching target region of the matching inspection region of the region ID = 2. The association between the regions for which the matching inspection is performed may be known, and the ID is not limited to that shown here.

By storing the matching inspection region information in a table or an ID, at the time of inspection, it is possible to perform these matching inspections by associating regions in the same table with each other or regions having the same ID with each other. For example, even if a plurality of matching inspection regions exist in the reference image of the same page, a desired matching inspection can be performed based on the association. Even if pages in the same table and of regions having the same ID are separated from each other, or even if regions exist across a plurality of pages, the matching inspection can be performed. Note that here, a method for separately setting regions of the data inspection and the matching inspection is illustrated as an example, but for example, a form in which the setting of the data inspection is provided with a setting as to whether to perform the matching inspection may be taken.

### Inspection Flow

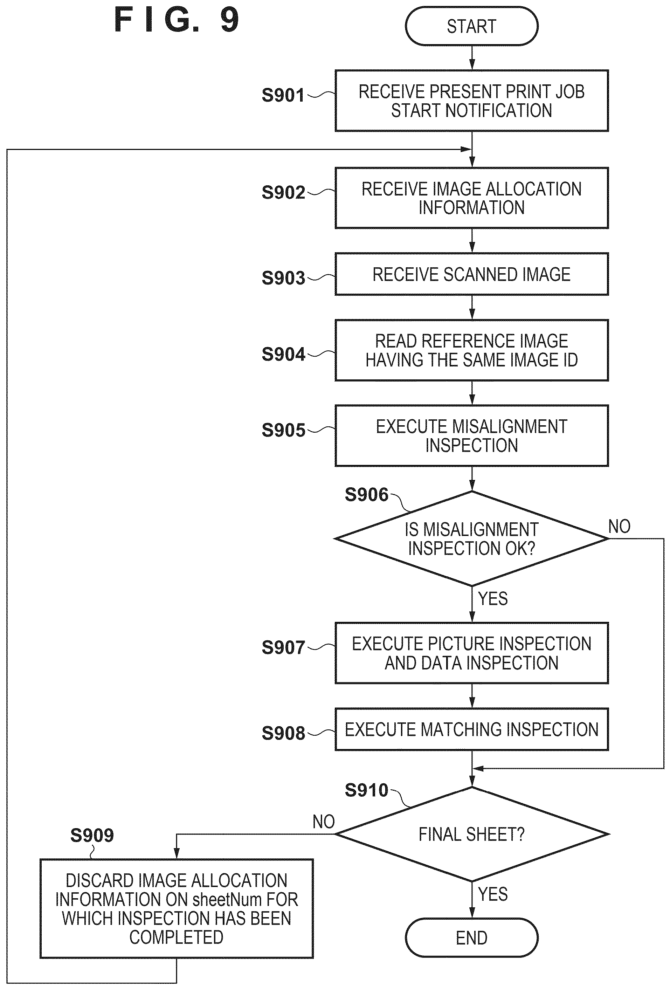

A processing procedure of the inspection operation according to the present embodiment will be described with reference to FIG. 9. The program of the inspection apparatus according to the present flow is stored in the ROM 253 of the inspection apparatus 150, read to the RAM 252, and executed by the CPU 251. The program of the image forming apparatus is stored in the ROM 203 of the image forming apparatus 100, read to the RAM 202, and executed by the CPU 201. The program of the information processing apparatus is stored in the ROM 243 of the information processing apparatus 140, read to the RAM 242, and executed by the CPU 241.

In S901, the CPU 251 of the inspection apparatus 150 receives a print job start notification from the image forming apparatus 100 by the data control unit 2502. The CPU 201 of the image forming apparatus 100 instructs the printer unit 209 to perform printing by the print control unit 2005. When the printed paper is conveyed from the image forming apparatus 100 to the inspection unit 110, the CPU 211 of the inspection unit 110 instructs the image reading unit 216 to perform scanning by the image reading control unit 2101.

In S902, if the inspection method is the RIP inspection, the data control unit 2502 receives image allocation information from the image forming apparatus 100. Upon receiving the image allocation information, the CPU 251 reads, from the RAM 252, the RIP image with the matching image ID with reference to the image ID of the received image allocation information by the reference image generation unit 2503. The RIP image here is an RIP image processed using the reference image parameter in S604. The reference image is generated using the read RIP image, the reference image parameter, and the image allocation information, and the generated reference image and the image allocation information are stored in the RAM 252. Since the image allocation information includes information determined at the time of printing, it is necessary to generate a reference image in accordance with the situation of printing on the paper in addition to the processing described in S604, and therefore the reference image is generated during the present print job. Here, the reference image generation unit 2503 processes the RIP image based on information such as the rotation amount and the shift amount, and generates the reference image. Note that if the inspection method is the scan inspection, the process skips S902 and proceeds to S903.

In S903, the data control unit 2502 receives and stores, into the RAM 252, the scanned image read by the image reading unit 216 of the inspection unit 110. If the inspection method is the RIP inspection, the image ID is assigned to the CPU 241 of the information processing apparatus 140 by the image processing control unit 2402, but if the inspection method is the scan inspection, the image ID is assigned by a similar method as that described in S604.

In S904, if the inspection method is the RIP inspection, the CPU 251 of the inspection apparatus 150 causes the inspection processing control unit 2504 to read, from the RAM 252, a reference image having the same image ID as the image ID of the image allocation information accepted in S902. On the other hand, if the inspection method is the scan inspection, the inspection processing control unit 2504 reads a reference image having the same image ID from the RAM 252 with reference to the image ID assigned in S903.

In S905, the inspection processing control unit 2504 inspects, using the reference image read in S904, misalignment of the scanned image received in S904. The misalignment inspection is as described with reference to the block diagram of the software configuration of the inspection apparatus 150 in FIG. 3. When the misalignment inspection is completed, the process proceeds to S906, and the inspection processing control unit 2504 determines whether or not the misalignment inspection has passed. The process proceeds to S907 in the case of passing, and the process proceeds to S910 in the case of failing.

In S907, the inspection processing control unit 2504 performs, using the reference image read in S904, a picture inspection and a data inspection on the scanned image received in S903. The picture inspection and the data inspection are as described with reference to the block diagram of the software configuration of the inspection apparatus 150 in FIG. 3. When the picture inspection and the data inspection are completed, the process proceeds to S908. Note that when the picture inspection and the data inspection region are not set in the reference image, the process skips S907 and proceeds to S908.

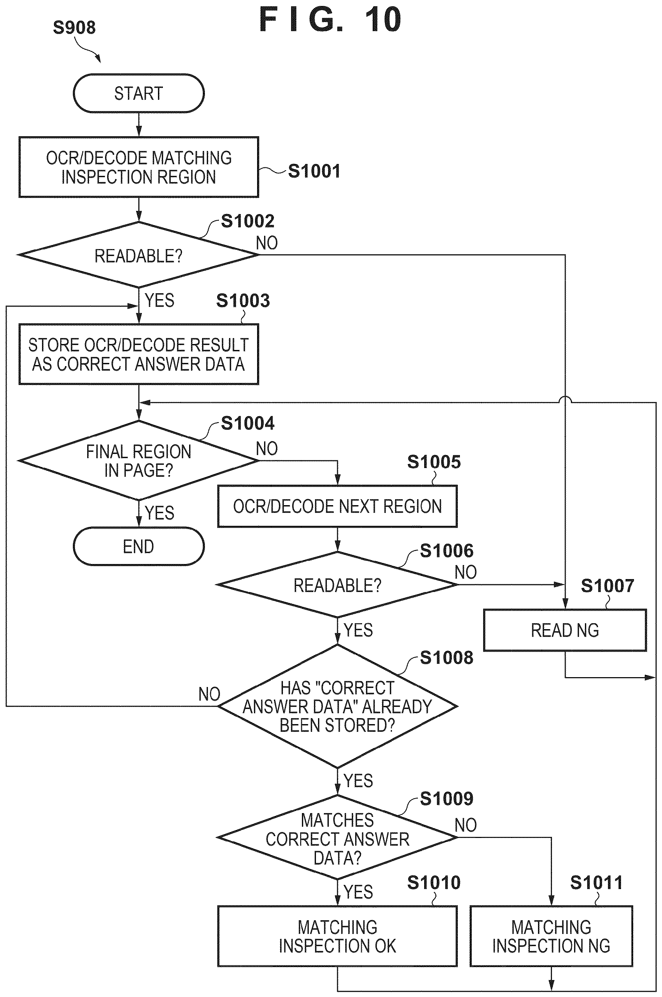

In S908, the inspection processing control unit 2504 performs, using the reference image read in S904, a matching inspection on the scanned image received in S903. The processing of the matching inspection will be described later in detail with reference to the flowchart of FIG. 10. When the processing of S908 ends, the process proceeds to S910.

In S910, the inspection processing control unit 2504 determines whether or not the inspected sheet is the final sheet of the inspection job. The above determination is performed until printing is completed if the inspection method is the scan inspection, and depending on whether a notification of information indicating that the page is the final page has been received in the image allocation information accepted in S902 if the inspection method is the RIP inspection. The process proceeds to S909 if the sheet is not the final sheet, and the processing of the present flowchart is ended if the sheet is the final sheet.

In S909, if the inspection method is the RIP inspection, the inspection processing control unit 2504 discards the image allocation information on the sheet number for which the inspection has been completed in S905 to S908. Note that if the inspection method is the scan inspection, the processing of S909 is skipped. Thereafter, the process returns to S902, and the processing of S905 to S908 is repeatedly executed until there is no matching inspection region in the page.

### Matching Inspection

A detailed processing procedure of the matching inspection (S908) in the inspection apparatus 150 will be described with reference to FIG. 10. The processing described below is realized by, for example, the CPU 251 of the inspection apparatus 150 developing, into the RAM 252, a program code stored in the ROM 253, reading and executing the program code developed into the RAM 252. As described above, the matching inspection is an inspection for checking whether reading results of two or more inspection regions match each other. Therefore, the display forms of the data need not be the same, it may be character strings or a character string and a barcode, and may be those with final results read as data matching each other.

In S1001, the inspection processing control unit 2504 performs data extraction processing. The data extraction processing is the same as the extraction processing performed in the data inspection as described with reference to the block diagram of the software configuration of the inspection apparatus 150 in FIG. 3. Subsequently, in S1002, the inspection processing control unit 2504 performs an inspection as to whether the character string and the barcode in the matching inspection region are readable. It is determined as passing if it is readable, and the reading result is added to the table and stored in the RAM 252. On the other hand, if it is unreadable, it is determined as failing. The process proceeds to S1003 if it is determined as passing, and the process proceeds to S1007 if it is determined as failing.

The character string of the result read here is stored in the table that stores the matching inspection region information. If the reading result in the matching inspection region 1102 of FIG. 11A is "01234", the inspection processing control unit 2504 adds, to the table 1103, and stores, into the RAM 252, this information. If it is unreadable, "reading NG" is stored in the table 1103. Note that storing "reading NG" is an example, and information that can identify that reading has been impossible may be stored.

In S1007, the inspection processing control unit 2504 stores, into the RAM 252, the information that has failed in the reading inspection, and proceeds to S1004. On the other hand, in S1003, the inspection processing control unit 2504 associates the data read in S1001 and S1002 with the table storing the matching inspection region information corresponding to the matching inspection being executed, stores the data into the RAM 252 as correct answer data, and proceeds to S1004. In the example of FIG. 11A, since the reading result is "01234", the inspection processing control unit 2504 stores the information of correct answer data = 01234 into the RAM 252 in association with the table 1103. When an ID is assigned to the region, the data read in S1001 and S1002 is stored in the RAM 252 as correct answer data in association with the region ID.

Next, in S1004, the inspection processing control unit 2504 determines whether there is another matching inspection region in the page of the reference image being inspected. If there is no other matching inspection region in the reference image, the processing of the present flowchart is ended. If another matching inspection region exists in the reference image, the process proceeds to S1005. In S1005, the inspection processing control unit 2504 performs the extraction processing of the matching inspection region described in S1001. Subsequently, in S1006, the inspection processing control unit 2504 performs the inspection as to whether it is readable described in S1002. It is determined as passing if it is readable also here, and the reading result is added to the table and stored in the RAM 252. For example, when the region read in S1005 and S1006 is the matching inspection region 1105 illustrated in FIG. 11B, the inspection processing control unit 2504 stores the decoding result of the barcode into the RAM 252 as a reading result. Here, the reading result of the matching inspection region 1105 is assumed to be "01234". The process proceeds to S1008 if it is determined as passing, and the process proceeds to S1007 if it is determined as failing.

In S1008, the inspection processing control unit 2504 determines whether the correct answer data has already been stored in association with the table or the region ID storing the matching inspection region information corresponding to the matching inspection being executed. The process proceeds to S1009 if the correct answer data has already been stored, and the process returns to S1003 if it has not been stored yet. In S1009, the inspection processing control unit 2504 compares the data read in S1005 and S1006 with the correct answer data. It is determined as passing if the data content of the two match, and it is determined as failing if the data does not match. The process proceeds to S1010 if it is determined as passing, and the process proceeds to S1011 if it is determined as failing. In the example of FIG. 11B, while the correct answer data is "01234", the result read in S1005 and S1006 is "01234", and since these two match each other, the matching inspection is determined to be passed.

In S1010, the inspection processing control unit 2504 stores, into the RAM 252, information indicating that the matching inspection region read in S1005 and S1001 has passed the matching inspection. Thereafter, the process returns to S1004, and this processing is continued until there is no matching inspection region in the page. On the other hand, in S1011, the inspection processing control unit 2504 stores, into the RAM 252, information indicating that the matching inspection region read in S1005 and S1001 has failed the matching inspection. Thereafter, the process returns to S1004, and this processing is continued until there is no matching inspection region in the page.

When the inspection processing control unit 2504 determines that there is no other matching inspection region in the page in S1004, the processing of the present flowchart is ended, and the process proceeds to S909 of FIG. 9. In the example of FIG. 11C, if the reference image being inspected is 1104 in S1004, for example, as the matching inspection region, the matching inspection region 1106 exists in addition to the matching inspection region 1105. If there is another matching inspection region in this manner, the process returns to S1005 without ending the inspection.

As described above, the inspection apparatus according to the present embodiment acquires a reference image in units of pages corresponding to a printed material, and sets an inspection setting of the printed material via the reference image in units of pages. In the setting, the first region is set, in accordance with a user operation, as an inspection region on a reference image of a first page for a matching inspection for inspecting whether or not information read from a printed image matches among a plurality of inspection regions. In the setting, the second region is set, in accordance with a user operation, as an inspection region of a matching target of the first region on a reference image of a second page of a page different from the first page. According to the present embodiment, without being limited to a pair of regions existing on the front and rear surfaces, it is possible to perform a matching inspection between regions existing on an identical surface, a plurality of surfaces, or separate surfaces. By eliminating the restriction of the page on which the matching inspection target can be set, it is possible to significantly increase the types of products on which the matching inspection can be executed.

### Second Embodiment

Hereinafter, a second embodiment of the present disclosure will be described. In the first embodiment, a method for generating the matching inspection region to be a matching target based on the information on the page input by the user and the number of regions has been described. In order to perform extraction processing of data in a region necessary for the matching inspection, it is necessary to set the orientation of the region and the font type and barcode type used in the region. When the number of matching inspection regions to be matching targets increases, setting this orientation, the font type, and the barcode type for each region requires a lot of steps for the user, and a load on the setting is large. Therefore, in the present embodiment, a method for further reducing the setting of the matching inspection region in consideration of the load of the above setting will be described. Hereinafter, regarding the present embodiment, parts different from those of the first embodiment will be mainly described. Note that parts not described in detail are similar to those in the first embodiment.

### Inspection Setting of Matching Inspection Region

Setting items on the matching target generation setting screen 800, which is the feature in the present embodiment, will be described. Information on the page and the number of regions for which a matching target is to be generated are input to the text box 801 and the text box 805, and the button 807 is operated, thereby generating a matching inspection region to be a matching target. Here, a matching inspection region having the same coordinates, orientation, and font type or barcode type as those of the matching inspection region first created is generated based on the information accepted in the text box 801, a setting item 802, and text boxes 803 to 805. At this time, a predetermined number of regions are generated in the reference image of a predetermined page. However, the coordinates, the orientation, and the font type or the barcode type of the inspection region are not necessarily set to be the same as those of the matching inspection region first created, and a form in which the user can edit the coordinates and the settings to arbitrary coordinates and settings after the generation of the matching target may be taken.

According to the present embodiment, settings of the orientation of the region, the font type, and the barcode type with a small number of steps of the user can be performed with respect to matching inspection regions existing in various pages. Since there are products in which the same font and barcode exist in the same orientation in the regions for which the matching inspection is performed, it is possible to prevent setting errors as compared with performing these settings in individual regions. From the above, it is possible to reduce the burden on the user related to the setting of the matching inspection region, and improve the convenience.

### Third Embodiment

Hereinafter, a third embodiment of the present disclosure will be described. In the second embodiment described above, a method for setting the orientation of the matching inspection region, the font type, and the barcode type with a small number of steps has been described. When generating the matching inspection region of the matching target, it is necessary to input the number of pages and the number of regions in addition to these settings. In a product for which the matching inspection is performed, for example, there is a case where it is desired to print 4 pages of print data per person for 10 persons and inspect matching of data that always exists on the first page. There is a case where it is desired to inspect that the data printed every time only in the odd-numbered pages of the print job matches in the entire print job. When such a setting having regularity is performed, a burden of the inspection setting that the user needs to repeatedly input the number of pages occurs. In a case where the user repeatedly performs input, there is a possibility that an input error occurs and an unintended inspection is performed.

Therefore, in the present embodiment, a method for further reducing the setting of the page at the time of generation of the matching inspection region of the matching target in consideration of the load of the setting will be described. Hereinafter, regarding the present embodiment, parts different from those of the first and second embodiments will be mainly described. Note that parts not described in detail are similar to those in the first embodiment and the second embodiment.

### Setting Method of Matching Inspection Region

Setting items on the matching target generation setting screen 800, which is the feature in the present embodiment, will be described. The setting item 802 in FIG. 8A is selected when a page to be generated that is a matching target is repeatedly set for each predetermined page. The text box 803 and the text box 804 are brought into an inputtable state if the setting item 802 is selected, and the text box 803 and the text box 804 are displayed as grayed out and becomes uninputtable if the selection is released.

The text box 803 and the text box 804 are regions for inputting regularity of the page for repeatedly generating the matching target. The text box 803 is a box for inputting the initial page, which is the first target page of the matching target. The text box 804 is a box for inputting an interval repeated for each predetermined page that is a target page.

For example, assume a case where it is desired to print 10 copies of print data of 4 pages per person and inspect that all the 10 copies of the data existing on the first page match. In this case, when a matching inspection region is first created on the first page, then the button 767 is operated, "1" that is the initial page is input to the text box 803 and "4" that is the repetition interval is input to the text box 804, a match region is generated every 4 pages. By generating the matching inspection region for every 1 page to 4 pages, it is possible to inspect that all the data content of the matching inspection region match over the 10 copies. It is assumed a case where it is desired to inspect that the data printed every time in the odd-numbered pages of the print data matches in the entire print job. In this case, the matching inspection target is first created on the first page, and "1" is input to the text box 803 and "2" is input to the text box 804, whereby the matching inspection region is set on all the odd-numbered pages of the job.

Note that the number of pages of an interval may be input to the text box 804. In this case, since the number of pages of the interval in a case where the matching inspection region is generated every 4 pages as described above is 3 pages, "3" is input. In a case where the matching inspection region is generated for each odd-numbered page, the number of pages of the interval is 1 page, and thus "1" is input.

According to the present embodiment, in a print job having regularity, the number of pages can be set with a small number of steps of the user. By reducing the number of steps of the user, it is possible to prevent an unintended matching inspection due to a setting error of the user. From the above, it is possible to reduce the burden on the user related to the page setting in the matching inspection region to be a matching target, and improve the convenience.

### Fourth Embodiment

Hereinafter, a fourth embodiment of the present disclosure will be described. In the first to third embodiments, a method for generating a plurality of matching inspection regions in various pages has been described. When a plurality of matching inspection regions exist, it is necessary for the user to correctly set the matching inspection of which regions to perform. This is because there is a possibility that an unintended inspection is executed if erroneous regions are set as matching targets.

In the present embodiment, a display method for a screen for performing a matching inspection as intended by the user by displaying a list of regions for performing matching inspection will be described. Hereinafter, regarding the present embodiment, differences from the first to third embodiments described above will be mainly described. Note that parts not described in detail are similar to those in the first to third embodiments.

### Inspection Setting of Matching Inspection Region

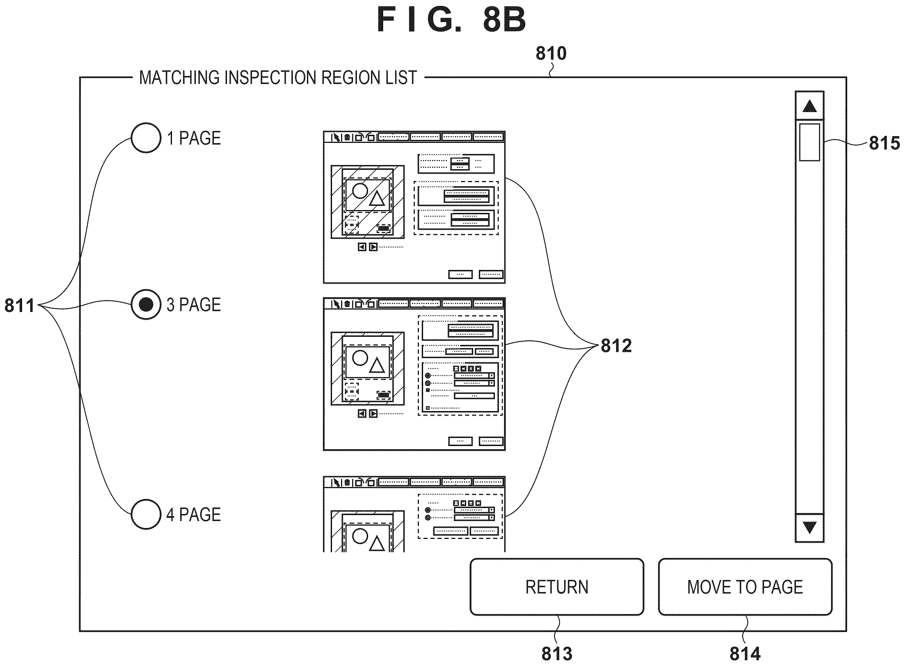

A matching inspection region list screen 810, which is a feature of the present embodiment, will be described. A button 768 on the inspection setting screen 700 is an example of a display object, and is a button for displaying a list screen of all regions for which the matching inspection is performed. When the button 768 is operated, the screen transitions to the matching inspection region list screen 810 illustrated in FIG. 8B.

FIG. 8B is an example of the matching inspection region list screen 810 to be displayed on the UI unit 257 by the display control unit 2501 of the inspection apparatus 150 when a list of the reference image and the region for which the matching inspection is performed is displayed. The list screen 810 is configured to include buttons 811, 813, and 814, a region 812, and a scroll bar 815.

The button 811 is a button for selecting a page. The number of pages is displayed on the button 811 so that the page can be identified, and when there are a plurality of this buttons 811, any one can be selected. The region 812 is a region for displaying the reference image of the page in which the matching inspection region is set and the set matching inspection region. When the matching inspection region is set on a plurality of pages, the reference images of the plurality of pages are listed in ascending order as illustrated in FIG. 8B, and the reference images that cannot be displayed can be browsed and the button 811 can be selected by operating the scroll bar 815. With the initial value immediately after the matching inspection region list screen 810 is displayed, a page with the smallest number is selected as the button 811.

The button 813 is a button for returning to the inspection setting screen 700, and when this button is operated, the matching inspection region list screen 810 is closed to return to the inspection setting screen 700. The button 814 is a button for moving to the reference image of the page selected by the button 811, and when this button is operated, the matching inspection region list screen 810 is closed to return to the inspection setting screen 700, and the display is jumped to the reference image of the page designated by the button 811.

When there are a plurality of the buttons 811, a form in which a plurality of them can be selected may be taken. In this case, when the button 814 is operated, the reference images of the selected page may be displayed side by side on the inspection setting screen 700. There is a case where a plurality of matching inspection regions exist in the same reference image. In this case, when a certain matching inspection region is selected, the matching inspection region to be a matching target may be highlighted. The highlight may take a form in which the color of the region is the same or the shape of the line is the same among the matching targets.

As described above, according to the present embodiment, it is easy to check in which regions the matching inspection to be performed when a plurality of matching inspection regions exist in various pages. It is possible to prevent omission of setting of the region and matching inspection between unintended regions, and the visibility of the user when checking a matching target is improved.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An inspection apparatus (150) comprising:
acquiring means (251) for acquiring a reference image in units of pages corresponding to a printed material; and
setting means (251) for setting an inspection setting (731, 732) of the printed material via the reference image in units of pages,
wherein the setting means sets a first region (709), in accordance with a user operation, as an inspection region on a reference image of a first page for a matching inspection for inspecting whether or not information read from a printed image matches among a plurality of inspection regions, and
sets a second region, in accordance with a user operation, as an inspection region of a matching target of the first region on a reference image of a second page different from the first page.

2. The inspection apparatus according to claim 1, wherein
the setting means causes a display means (257) to display an inspection setting screen (700) that displays the reference image in units of pages, and accept an inspection setting via the inspection setting screen.

3. The inspection apparatus according to claim 2, wherein
the setting means accepts the first region on a reference image of the first page displayed on the inspection setting screen.

4. The inspection apparatus according to claim 3, wherein
when a display object (767) for starting settings of a plurality of inspection regions in a matching inspection is selected on the inspection setting screen, the setting means causes the display means to display a setting screen (800) of a matching target, the setting screen accepting, by a user operation, a number of pages for setting an inspection region and a number of inspection regions to be set.

5. The inspection apparatus according to claim 4, wherein
at least one of designation for each single page number and designation of a page range including a plurality of pages can be performed as the number of pages for setting the inspection region on the setting screen of the matching target.

6. The inspection apparatus according to claim 4, wherein
regularity of a page that is an inspection target can be designated as the number of pages for setting the inspection region on the setting screen of the matching target.

7. The inspection apparatus according to claim 6, wherein
in the setting screen of the matching target, in a case where the second region is repeatedly set for each predetermined page from the first page, the first page for setting the first region and the predetermined page indicating a repetition interval can be designated as the regularity of a page that is the inspection target.

8. The inspection apparatus according to claim 4, wherein
the setting means sets the second region corresponding to the first region for each corresponding page in accordance with information accepted via the setting screen of the matching target.

9. The inspection apparatus according to claim 8, wherein
in a case where the second region is set, the setting means sets, to a same parameter as the first region, at least one parameter among a coordinate and an orientation of an inspection region and a font type or a code type of data included in the inspection region.

10. The inspection apparatus according to claim 8, wherein
when a display object for displaying a list of a plurality of set inspection regions in a matching inspection is selected on the inspection setting screen, the setting means displays, on the display means, a list screen for selectably displaying reference images of a page in which an inspection region is set.

11. The inspection apparatus according to claim 10, wherein
one or more set inspection regions are identifiably displayed on a reference image to be displayed on the list screen.

12. The inspection apparatus according to claim 10, wherein
when a predetermined reference image is selected from reference images displayed on the list screen, the list screen transitions to the inspection setting screen of a page corresponding to the predetermined reference image.

13. The inspection apparatus according to claim 8, wherein
the setting means sets a plurality of inspection regions in one page.

14. The inspection apparatus according to claim 13, wherein
in a case where matching targets of a plurality of groups are set, the plurality of inspection regions include an inspection region of a matching target of a different group.

15. The inspection apparatus according to claim 14, wherein
the plurality of inspection regions include the first region and the second region of a matching target of a predetermined group.

16. The inspection apparatus according to claim 8, wherein
on the inspection setting screen, in addition to parameters regarding an inspection region and an inspection of the matching inspection, a parameter is set, the parameter regarding an inspection region and an inspection in at least one inspection of a print image inspection for inspecting a misalignment and an abnormality of a print image and a data inspection for inspecting data to be extracted from a character string or a code included in a print image.

17. A control method for an inspection apparatus, the control method comprising:
acquiring a reference image in units of pages corresponding to a printed material; and
setting an inspection setting of the printed material via the reference image in units of pages, wherein
in the setting of the inspection setting,
a first region is set, in accordance with a user operation, as an inspection region on a reference image of a first page for a matching inspection for inspecting whether or not information read from a printed image matches among a plurality of inspection regions, and
a second region is set, in accordance with a user operation, as an inspection region of a matching target of the first region on a reference image of a second page different from the first page.

18. A non-transitory computer-readable storage medium storing a computer program for causing a computer to execute each process in a control method for an inspection apparatus, the control method comprising:
acquiring a reference image in units of pages corresponding to a printed material; and
setting an inspection setting of the printed material via the reference image in units of pages, wherein
in the setting of the inspection setting,
a first region is set, in accordance with a user operation, as an inspection region on a reference image of a first page for a matching inspection for inspecting whether or not information read from a printed image matches among a plurality of inspection regions, and
a second region is set, in accordance with a user operation, as an inspection region of a matching target of the first region on a reference image of a second page different from the first page.
